# EUROPÄISCHE PATENTSCHRIFT

(11) **EP 0 640 870 B1**
(45) Veröffentlichungstag und Bekanntmachung des Hinweises auf die Patenterteilung: **15.07.1998**
(21) Anmeldenummer: 93810610.1
(22) Anmeldetag: 25.08.1993
(51) Int. Cl.: G03B 27/72

(54) **Belichtungsstation für ein fotografisches Kopiergerät**
Exposure station for a photographic printer
Station d'exposition pour imprimante photographique

(43) Veröffentlichungstag der Anmeldung: 01.03.1995
(73) Patentinhaber: GRETAG IMAGING AG, CH-8105 Regensdorf (CH)
(72) Erfinder: Frick, Beat, Dr., CH-8107 Buchs (CH)
(74) Vertreter: Schwabe - Sandmair - Marx

(56) Entgegenhaltungen:
- DE-A- 3 116 858
- DE-A- 4 103 995
- US-A- 5 041 868
- US-A- 5 057 864

## Beschreibung

Die Erfindung betrifft eine Belichtungsstation für ein fotografischen Kopiergerätes gemäss dem Patentanspruch 1.

Die Verarbeitung von fotografischen Filmen, insbesondere von Negativfilmen, und die Erstellung der zugehörigen Bilder erfolgt heute nicht mehr ausschliesslich in grossen Fotolabors, sondern vielfach dezentralisiert. In zunehmendem Masse bieten beispielsweise kleinere Foto- und Unterhaltungselektronikgeschäfte, Drogerien oder entsprechende Abteilungen von Supermärkten an, die Negativfilme zu entwickeln und Bilder des gewünschten Formats zu erstellen. Da an diesen dezentralen Standorten die Platzfrage üblicherweise eine grosse Rolle spielt, besteht der Wunsch nach möglichst kompakten Verarbeitungsgeräten. Zugleich sollen die Verarbeitungsgeräte möglichst vielfältig einsetzbar sein und es erlauben, unterschiedliche Bildformate zu einem grossen Teil von Negativen des Kleinbild-Filmformates zu erstellen.

In einem optisch abbildenden System eines fotografischen Kopiergerätes ist bei exakt homogener Ausleuchtung der transparenten Vorlage die Beleuchtungsstärke in der Bildebene inhomogen. Vom Bildzentrum zum Bildrand nimmt die Beleuchtungsstärke nach einem cos⁴-Gesetz des Bildwinkels ab. Dabei wird unter dem Bildwinkel der Winkel verstanden, den der Hauptstrahl zwischen einem Punkt auf dem Negativ und dem entsprechenden Bildpunkt der Bildebene mit der optischen Achse einschliesst. Bei den bekannten Kopiergeräten ist der Abstand zwischen dem Negativ und der Bildebene üblicherweise relativ gross und beträgt von etwa 500 mm bis etwa 800 mm. Bei diesen relativ grossen Abständen treten im allgemeinen relativ kleine Bildwinkel auf. Zudem sind Grossgeräte, insbesondere Hochleistungsprinter, üblicherweise nicht für eine Vielzahl von verschiedenen Bildformaten ausgerüstet, da ihre Aufgabe ja in erster Linie in der kurzfristigen Verarbeitung und Erstellung einer sehr grossen Anzahl Bilder eines einzigen Formats ist. Bei diesen Kopiergeräten tritt aufgrund des festen Vergrösserungsmassstabes immer derselbe maximale Bildwinkel auf. Das Problem des Randabfalls ist bei diesen Kopiergeräten daher nur ein "statisches", dass durch eine geeignete Ausbildung der Beleuchtungsoptik, beispielsweise des Kondensors behoben werden kann. Auf diese Weise wird eine gezielte Randüberhöhung der Beleuchtungsstärke erreicht, welche den Randabfall kompensieren soll. Es sind auch Kopiergeräte bekannt, die für unterschiedliche Bildformate geeignet sind. Bei diesen Geräten sind auswechselbare Kondensoren vorgesehen, die den unterschiedlichen Randabfällen Rechnung tragen sollen. Allerdings ist festzuhalten, dass auswechselbare Kondensoren oder sogar Beleuchtungseinheiten relativ teuer sind und oftmals auch relativ gross in der Bauart.

Bei den kompakten Kopiergeräten tragen zwei Faktoren zur Vergrösserung des Problems des Randabfalls bei. Die geforderte Kompaktheit des Kopiergerätes bedingt, dass der Abstand des Negativs zur Bildebene verringert wird, beispielsweise auf etwa 400 mm. Zugleich sollen die kompakten fotografischen Kopiergeräte in der Lage sein, von Kleinbildfilmen des Negativformats 24 mm x 36 mm und sogar von halbformatigen Negativvorlagen Bilder des Formats 3.5" x 5" bis 6" x 9" herzustellen. Bei Vorlagen des Kleinbildformates von 24 mm x 36 mm und den je nach Vergrösserung erforderlichen Abständen zwischen Abbildungsobjektiv und Vorlage von etwa 40 mm, bei grosser Vergrösserung, bis etwa 80 mm, bei kleiner Vergrösserung, beträgt der naturgesetzmässig bedingte Randabfall der Beleuchtungsstärke am äussersten Bildrand, in der Bildecke, 40 % bzw. 13 %. Für die korrekte Bildbelichtung einer Kopiervorlage ist aber nur ein Randabfall zwischen 5 % und 15 % erforderlich. Werden diese Grenzwerte über- oder unterschritten, so werden beim verwendeten Kopiermaterial die unterschiedlichen Beleuchtungstärken im Bildzentrum und am Bildrand sichtbar, und es entsteht ein Bild, das den Eindruck einer falschen Ausleuchtung bei der Aufnahme erweckt.

Im Unterschied zu den Hochleistungsprintern stellt sich bei den kompakten Kopiergeräten das Problem des Randabfalls der Beleuchtungsstäre als "dynamisches" Problem. Es besteht daher die Aufgabe, bei einem fotografischen Kopiergerät, insbesondere kompakter Bauweise, das Problem des Randabfalls der Beleuchtungsstärke zu lösen. Insbesondere soll es möglich sein, den bei unterschiedlichen Bildformaten bzw. Vergrösserungsmassstäben sehr unterschiedlichen Randabfall gezielt zu kompensieren und das Kopiergerät schnell an die geänderten Verhältnisse anzupassen. Die Lösung soll einfach und platzsparend realisierbar sein. Zudem soll die Lösung auch kostengünstig durchführbar sein.

Die US-A-5,041,868 zeigt eine Station zur Belichtung, bei der die Brennweite entsprechend einer Vergrößerungseinstellung geändert werden kann, wobei das bekannte Belichtungssystem unterschiedliche Vergrößerungsmaßstäbe zuläßt. Die Belichtungszeit wird entsprechend dem Vergrößerungsmaßstab berechnet und zu Testzwecken werden Testabzüge bei mehrerern verschiedenen Vergrößerungseinstellungen der Zoomlinse durchgeführt. Korrekturdaten werden aus Dichtemessungen berechnet, die von den Testabzügen gewonnen werden.

Es ist die Aufgabe der vorliegenden Erfindung, den bei unterschiedlichen Bildformaten bzw. Vergrößerungsmaßstäben sehr unterschiedlichen Randabfall soweit als möglich zu kompensieren.

Die Lösung dieser Aufgabe wird durch ein Belichtungssystem mit den im Patentanspruch 1 aufgeführten Merkmalen gelöst.

Zweckmäßige Ausführungsformen des erfindungsgemäßen Belichtungssystems werden durch die in den Unteransprüchen aufgeführten Merkmale vorgeschlagen.

Zu den gemäß der Erfindung zu erzielenden Vorteilen gehört es, daß die erfindungsgemäße Beleuchtungseinrichtung sehr einfach an den bei unterschiedlichen Vergrösserungsmassstäben sehr unterschiedlich grossen Randabfall der Beleuchtungsstärke in der Bildebene angepasst werden kann um diesen zu kompensieren.

Die Mattscheibe wenigstens eines der Lichtschächte streut das auf sie einfallende Kopierlicht im wesentlichen nach dem Lambertschen Gesetz diffus und deren Transmissionseigenschaften sind durch die lichtaustrittsseitigen Mittel dem jeweiligen Vergrösserungsmassstab entsprechend beeinflussbar. Auf diese Weise ist sichergestellt, dass das einfallende Licht optimal gestreut wird, wobei die Leuchtdichte der diffus strahlenden Mattscheibe im wesentlichen dem Lambertschen Cosinusgesetz gehorcht, und dass die Vorlage den Anforderungen entsprechend ausgeleuchtet wird. Dadurch ist es nicht mehr erforderlich die Kopierlichtquelle auszutauschen, um den durch den veränderten Vergrösserungsmassstab geänderten Beleuchtungserfordemissen Rechnung zu tragen.

Die Form des Lichtschachtes ist dabei derart gewählt, dass die Kopiervorlage vollständig ausgeleuchtet ist, dass Vorzugsrichtungen des eingestrahlten Kopierlichtes unterbunden sind, und dass die Leuchtdichte des eingestrahlten Lichtes im Zentrum der Mattscheibe bei gegebener Lampenleistung möglichst gross ist und vom Zentrum zum Rand des ausgeleuchteten Bereichs der Mattscheibe zunimmt, wo sie beispielsweise um etwa 25% höher ist als im Zentrum. Auf diese Weise kann beispielsweise bereits bei einer Mattscheibe mit homogener Transmission der bei grossen Vergrösserungen auftretende Randabfall gut kompensiert werden.

Vorzugsweise weist die lichtaustrittsseitige Mattscheibe eine über ihre Fläche homogene Transmission auf, die von den lichtaustrittsseitigen Mitteln derart beeinflussbar ist, dass die Transmission ausgehend von einem unveränderten zentralen Bereich radial nach aussen abnimmt. Beispielsweise beträgt die Transmission am Rand des ausgeleuteten Bereiches der Mattscheibe etwa 85% der Transmission im zentralen Bereich der Mattscheibe. Auf diese Weise können die Beleuchtungsverhältnisse an kleine und mittlere Vergrösserungsmassstäbe angepasst werden und damit der natürliche Randabfall kompensiert werden.

Ein besonders einfaches Ausführungsbeispiel der lichtaustrittsseitigen Mittel ist vorzugsweise schwarzes Punkt-Raster mit örtlich variabler Punktgrösse. Dabei ist die Ortsabhängigkeit der Punktgrösse des Punkt-Rasters vorzugsweise derart gewählt, dass bei minimaler Vergrösserung ein Randabfall des Kopierlichtes auf dem Kopiermaterial von 5% eintritt. Auf diese Weise ist gewährleistet, dass der Randabfall von den bekannten Kopiermaterialien nicht störend wiedergegeben wird.

Eine konstruktiv etwas aufwendigere aber sehr elegante Variante der Erfindung besteht darin, dass das Punkt-Raster lichtaustrittseitig des Lichtschachtes in den Strahlengang des Kopierlichtes einschwenkbar ist. Gemäß der Erfindung umfasst die Beleuchtungseinrichtung der Belichtungsstation einen Satz bestehend aus wenigstens zwei Lichtschächten, die zur Anpassung der Beleuchtungsverhältnisse der Kopiervorlage an den jeweiligen Vergrösserungsmassstab auswechselbar sind und bis auf die Transmissionseigenschaften der lichtaustrittsseitigen Mattscheibe baugleich sind. Auf diese Weise kann die Beleuchtungseinrichtung sehr einfach an den bei unterschiedlichen Vergrösserungsmassstäben sehr unterschiedlich grossen Randabfall der Beleuchtungsstärke in der Bildebene angepasst werden, um diesen zu kompensieren. Durch die Ausstattung der Beleuchtungseinrichtung mit einem Satz von Lichtschächten können kurzfristig, einfach durch Austauschen und Einsetzen eines geeigneten Lichtschachtes, die Beleuchtungsverhältnisse an die geänderten Erfordernisse angepasst werden. Die Flexibilität der Beleuchtungseinrichtung wird dadurch deutlich erhöht.

Vorzugsweise umfasst der Satz Lichtschächte einen ersten Lichtschacht, dessen austrittsseitige Mattscheibe eine über ihre Fläche homogene Transmission aufweist, und wenigstens einen baugleichen zweiten Lichtschacht, dessen austrittsseitige Mattscheibe eine vom Zentrum zum Aussenrand der Mattscheibe radial abnehmende Transmission aufweist, die im zentralen Bereich der Mattscheibe etwa 100% und im Randbereich etwa 85% der Transmission der ausgangsseitigen Mattscheibe des ersten Lichtschachtes.Der erste Lichtschacht ist für die Kompensation des Randabfalls bei grossen Vergrösserungen ausgebildet. Die radiale Inhomogenität der Transmission der austrittsseitigen Mattscheibe des zweiten Lichtschachtes ist ausreichend, um den bei kleinen und mittleren Vergrösserungen auftretenden Randabfall zu kompensieren.

Die radiale Inhomogenität der Transmission der lichtaustrittsseitige Mattscheibe des zweiten Lichtschachtes wird dadurch erreicht, diese diese mit einem vorzugsweise schwarzen Punkt-Raster mit örtlich variabler Punktgrösse versehen ist. Eine besonders einfache Erstellung des Punk-Rasters besteht darin, dieses auf der der Lampe zugewandten Seite der lichtaustrittsseitigen Mattscheibe in einem Raster von etwa 2 mm Abstand, vorzugsweise im Siebdruckverfahren, aufzudrucken.

Besonders geeignete Materialien für die austrittsseitige Mattscheibe ist Polymethylmethacrylat (Plexiglas) mit einer Dicke von etwa 2 mm bis etwa 4 mm, vorzugsweise etwa 3 mm, die ein Streuvermögen von mindestens etwa 0.50 aufweist und einen Transmissionsgrad wenigstens etwa 40% aufweist. Diese Materialien weisen ausreichend bis sehr gute Transmissionen auf und haben Diffusoreigenschaften, die im wesentlichen dem Lambertschen Gesetz gehorchen. Die Dicke von 3 mm wird dabei besonders bevorzugt, da diese Dicke bei den genormten Materialprüfungen hinsichtlich Transmission und Streuverhalten zur Anwendung kommen. Diese publizierten und tabellarisch festgehaltenen Werte erlauben einen unmittelbaren Vergleich verschiedener Materialien. Vorzugsweise weist jeder Lichtschacht ein Gehäuse aus einem Kunststoffspritzgussteil auf, dessen einander zugewandte Innenwände zur Verspiegelung mit Aluminium und ggf. mit Siliziumdioxid bedampft oder sonstwie reflektierend beschichtet sind. Derartige Lichtschächte sind einfach und kostengünstig in den gewünschten Formen herstellbar.

Im folgenden wird die Erfindung mit allen ihr als wesentlich zugehörigen Bestandteilen unter Bezugnahme auf die Darstellungen eines Ausführungsbeispiels näher erläutert. In den schematischen Darstellungen sind jeweils gleiche Bauteile und Elemente mit denselben Bezugszeichen versehen. Es zeigen:
- Fig. 1: eine Belichtungsstation eines fotografischen Kopiergeräts mit einer erfindungsgemässen Beleuchtungseinrichtung,
- Fig. 2: einen Lichtschacht im Aufriss,
- Fig. 3: den Lichtschacht aus Fig. 2 im Seitenriss, und
- Fig. 4: eine Mattscheibe mit Punkt-Raster.

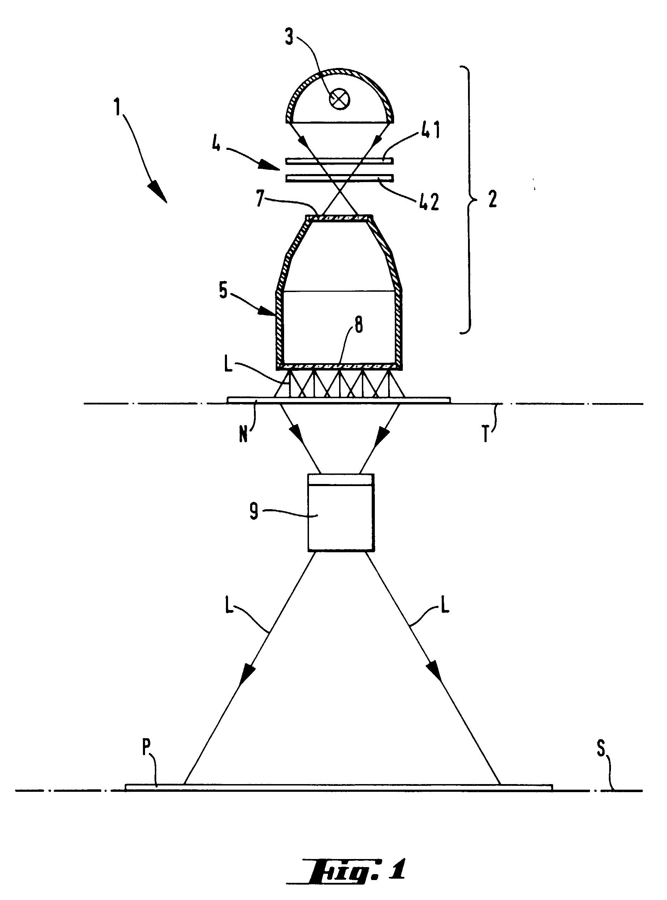

In Fig. 1 ist eine Belichtungsstation eines fotografischen Kopiergerätes schematisch dargestellt und gesamthaft mit dem Bezugszeichen 1 versehen. Eine derartige Belichtungsstation 1 ist üblicherweise im Anschluss an eine Messstation angeordnet, in welcher die Kopiervorlagen vorzugsweise bereichsweise mit Messlicht abgetastet werden, und das transmittierte oder remittierte Messlicht analysiert wird. In einer angeschlossenen Rechnereinheit werden bei Farbvorlagen Farbauszugswerte bestimmt, und daraus nach bestimmten Kriterien die erforderlichen Kopierlichtmengen in den drei Grundfarben Rot, Grün und Blau ermittelt. Mit Hilfe dieser ermittelten Kopierlichtmengen werden in der anschliessenden Belichtungsstation 1 von den fotografischen Vorlagen, üblicherweise Negativfilm, Kopien auf fotografisches Kopiermaterial, üblicherweise fotografisches Papier, belichtet.

Die Belichtungsstation 1 umfasst eine oberhalb einer Transportebene T für die Kopiervorlage N angeordnete Beleuchtungseinrichtung 2 und eine Projektionsoptik 9, die sich unterhalb der Transportebene T für die Kopiervorlage N im Strahlengang des Kopierlichtes L befindet. Die Transportebene T für die Kopiervorlage ist dabei durch die Filmbühne am fotografischen Kopiergerät festgelegt. Die Projektionsoptik 9 ist mit mehreren Projektionsobjektiven ausgestattet, mit deren Hilfe unterschiedliche Vergrösserungen der Kopiervorlage auf dem fotografischen Kopiermaterial P einstellbar sind, das in einer Transportebene S unterhalb der Filmbühne vorbeibewegt wird. Der maximal einstellbare Abstand zwischen der Projektionsoptik und der Kopiervorlage beträgt beispielsweise etwa 100 mm. Es versteht sich, dass diejenigen Bereiche des fotografischen Kopiergerätes, durch die das lichtempfindliche Kopiermaterial P bewegt wird, gegenüber dem Umgebungslicht abgeschottet sind. Eine Belichtung des Kopiermaterials P erfolgt jeweils nur in demjenigen Bereich, der vom Kopierlicht L beaufschlagt wird. Die Projektionsoptik 9 weist verschiedene Projektionsobjektive mit Brennweiten von etwa 35 mm bis etwa 66 mm auf, sie kann aber auch eine Optik mit einer vorzugsweise kontinuierlich verstellbaren Brennweite umfassen.

Die oberhalb der Transportebene T für die Kopiervorlage N angeordnete Beleuchtungseinrichtung 2 umfasst eine Lampe 3 mit Reflektor und Kondensor, eine nach der Lampe 3 im Strahlengang des Kopierlichtes L befindliche Filteranordnung 4 und daran anschliessend einen Lichtschacht 5, der bis kurz vor die Filmbühne reicht. Die Kopierlichtquelle 3 ist üblicherweise eine Halogen Kaltlichtspiegellampe. Die Filteranordnung 4 umfasst ein Infra-Rot-Stoppfilter 41 und ein Farbfilterrad 42 zur Belichtung in den drei Grundfarben. Der Lichtschacht 5 weist lichteintrittsseitig und lichtaustrittsseitig je eine Mattscheibe 7 bzw. 8 auf. Der Abstand der lichtaustrittsseitigen Mattscheibe 8 von der entlang der Transportebene T transportierten Kopiervorlage N beträgt beispielsweise etwa 20 mm.

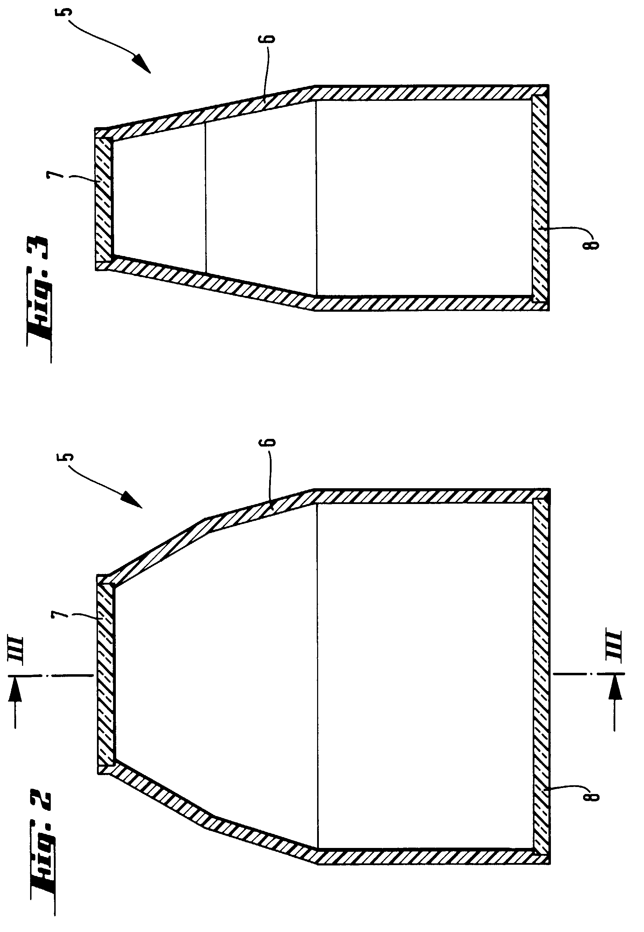

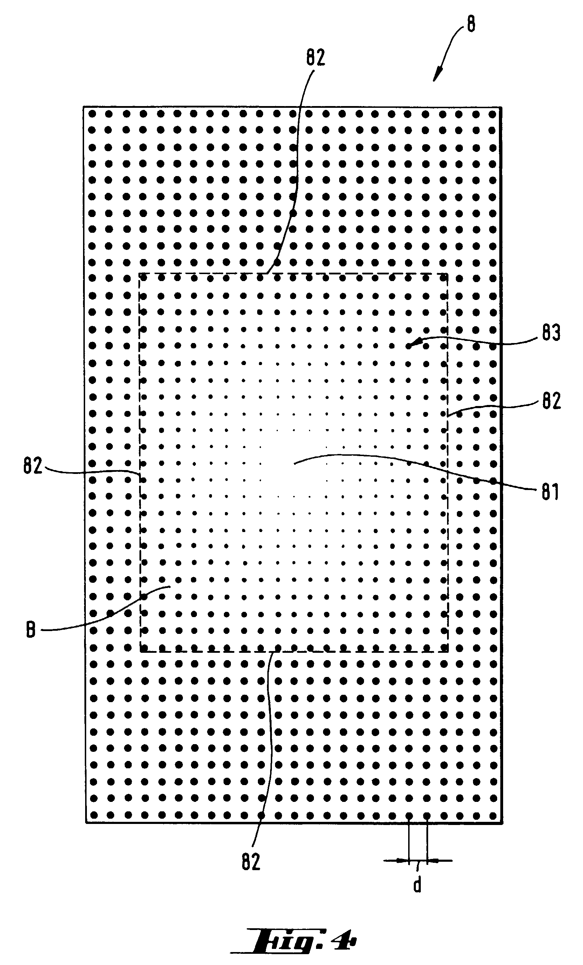

Gemäss der Erfindung umfasst die Beleuchtungseinrichtung einen Satz von austauschbaren Lichtschächten 5, um die Beleuchtungsverhältnisse der Kopiervorlage N an den jeweiligen durch Verstellen der Projektionsoptik 9 eingestellten Vergrösserungsmassstab anzupassen. In der gleichen Weise können auch die Ausleuchtungsverhältnisse an das jeweilige Format der Kopiervorlage (Vollformat, Halbformat) angepasst werden. Auf diese Weise kann der bei verschiedenen Vergrösserungsmassstäben sehr unterschiedliche Randabfall sehr einfach kompensiert werden, indem ein geeigneter Lichtschacht 5 aus dem Satz ausgewählt und in den Strahlengang der Kopierlichtquelle 3 eingesetzt wird. Die unterschiedlichen Ausleuchtverhältnisse werden durch eine spezielle Formgebung der Lichtschächte zusammen mit einer spezielle Ausbildung der Lichtaustrittsbereiche der Lichtschächte erzielt. Die Fachwelt wird es als besonders vorteilhaft ansehen, dass die Lichtschächte eines Satzes bis auf den Lichtaustrittsbereich baugleich sind. Auf diese Weise können an der entsprechenden Position der Belichtungsstation einfache Klemm- oder Schraubvorrichtungen (nicht dargestellt) vorgesehen sein, an denen das Gehäuse 6 (Fig. 2 bzw. 3) des jeweiligen Lichtschachtes 5 befestigbar ist. Auch ist auf diese Weise die Herstellung der Lichtschächte besonders einfach und kostengünstig. Beispielsweise ist nur ein einzige Spritzgussform erforderlich. Dies reduziert die Initialkosten und erleichtert die Lagerhaltung. Überdies kann aufgrund der identischen Form der Lichtschächte deren Bearbeitung automatisiert werden, was den Kostenaufwand gleichfalls niedrig hält.

In den Fig. 2 und 3 ist ein bevorzugtes Ausführungsbeispiel eines Lichtschachtes 5 im Auf- und Seitenriss dargestellt. Dabei verläuft der Aufriss parallel zur Tansportrichtung der Kopiervorlage N und senkrecht zur Transportebene T. Der Seitenriss verläuft senkrecht zur Transportrichtung und zur Transportebene T. Der Lichtschacht weist ein Gehäuse 6 aus Kunststoff auf, dessen einander zugewandte Innenwände verspiegelt sind. Das Kunststoffgehäuse 6 wird vorzugsweise in Spritzgusstechnik hergestellt. Die Innenwände sind vorzugsweise mit Aluminium und gegebenenfalls mit Siliziumdioxid bedampft oder sonstwie reflektierend beschichtet. Lichteintrittsseitig und lichtaustrittsseitig ist jeder Lichtschacht mit einer Mattscheibe 7 bzw. 8 ausgestattet. Insbesondere bei der lichtaustrittsseitigen Mattscheibe 8 ist das Material derart gewählt, dass sie das auf sie einfallende Kopierlicht L im wesentlichen nach dem Lambertschen Gesetz diffus streut. Ein besonders geeignetes Material für die Mattscheiben 7,8 ist Polymethylmethacrylat (Plexiglas) einer Dicke von etwa 2 mm bis etwa 4 mm, bevorzugt etwa 3 mm. Dabei ist darauf zu achten, dass insbesondere für die lichtaustrittsseitige Mattscheibe ein Plexiglastyp eingesetzt wird, der ein Streuvermögen von mindestens etwa 0.57 aufweist und einen Transmissionsgrad wenigstens etwa 44% aufweist.

Die Form des Gehäuses 6 des Lichtschachtes 5, die für alle Lichtschächte eines Satzes gleich ist, ist derart gewählt, dass die Vorlage vollständig ausgeleuchtet ist und Vorzugsrichtungen des eingestrahlten Kopierlichtes L unterbunden sind. Zugleich ist durch die Festlegung der Form des Gehäuses 6 gewährleistet, dass die Leuchtdichte des eingestrahlten Kopierlichtes L im Zentrum der ausgangsseitigen Mattscheibe 8 bei gegebener Lampenleistung möglichst gross ist und vom Zentrum 81 zum Rand 82 des ausgeleuchteten Bereichs der Mattscheibe zunimmt, wo sie beispielsweise um etwa 25% höher ist als im Zentrum 81 (Fig. 4). Der Ausgeleuchtete Bereich der Mattscheibe entspricht dabei wenigstens etwa den Abmessungen der Kopiervorlage, insbesondere einer Negativvorlage auf einem Kleinbildfilm.

Das Gehäuse 6 des beispielsweise dargestellten Lichtschachtes 5 hat eine Gesamtbauhöhe von etwa 110 mm. Es besitzt etwa die Form eines mehfach gekröpften Pyramidenstumpfes mit rechteckiger Grundfläche. Im Bereich der lichteintrittsseitigen Mattscheibe 7 besitzt das Gehäuse 6 eine Länge von 44.2 mm und eine Breite von 30.4 mm. Lichtaustrittsseitig besitzt das Gehäuse 6 eine Länge von 85 mm und eine Breite von 50 mm. Die Längen- und Breitenmasse beziehen sich immer jeweils auf die Abstände der Innenwände des Gehäuses 6. Die Höhe des quaderförmigen Teils des Gehäuses 6 beträgt 52 mm.

Ein Satz austauschbarer Lichtschächte besteht aus mindestens zwei Lichtschächten. Dabei ist ein Lichtschacht für die Kompensation des Randabfalls des Kopierlichts L bei grossen Vergrösserungsmassstäben und ein zweiter Lichtschacht für die entsprechende Kompensation bei kleinen und mittleren Vergrösserungsmassstäben vorgesehen. Die beiden Lichtschächte unterscheiden sich in den Transmissionseigenschaften der lichtaustrittsseitigen Mattscheibe 8. Die lichtaustrittsseitige Mattscheibe 8 des ersten Lichtschachts besitzt eine über ihre Fläche homogene Transmission, während die Transmission der lichtaustrittsseitigen Mattscheibe 8 des baugleichen zweiten Lichtschachtes vom Zentrum 81 zum Rand 82 des ausgeleuchteten Bereiches B der Mattscheibe 8 radial nach aussen abnimmt. Im zentralen Bereich 81 liegt die Transmission bei etwa 100% der Transmission der lichtaustrittsseitigen Mattscheibe 8 des ersten Lichtschachtes. Im Randbereich 82 beträgt die Transmission beispielsweise noch etwa 85% der Transmission der lichtaustrittsseitigen Mattscheibe 8 des ersten Lichtschachtes.

Gemäss der beispielsweisen Darstellung in Fig. 4 ist die lichtaustrittsseitige Mattscheibe 8 des zweiten Lichtschachtes mit einem vorzugsweise schwarzen Punkt-Raster 83 mit örtlich variabler Punktgrösse versehen. Das Punkt-Raster 83 ist vorzugsweise auf der der Lampe zugewandten Seite der lichtaustrittsseitigen Mattscheibe 8 aufgedruckt. Ein besonders geeignetes Herstellungsverfahren für das Punkt-Raster 83 stellt beispielsweise der Siebdruck dar. Die Punkte werden dabei in einem quadratischen Raster mit einer Gitterperiode d von 2 mm gedruckt. Die über eine Gitterzelle gemittelte Absorption a bei einer gegebenen Punktgrösse von r beträgt a = π.r²/d² , was dem Verhältnis der absorbierenden bedruckten Fläche zu der Gesamtfläche der Gitterzelle entspricht. Eine Absorption von etwa 10% wird bei einer Punktgrösse r = 0.36 mm erreicht.

Die lokale Absorption wird durch eine zweidimensionale Funktion a(x,y) beschrieben, wobei x,y die Koordinaten eines Punktes auf der lichtaustrittsseitigen Mattscheibe 8 in Länge (x = -42.5 mm ... x = 42.5 mm) und Breite (y = -25 mm ... y = 25 mm) der Mattscheibe sind. Der Punkt x = 0, y = 0 beschreibt das Zentrum der Mattscheibe. Die Absorption im Zentrum ist gleich 0, daraus resultiert eine Punktgrösse von 0. Zum Rand des ausgeleuchteten Bereiches B der Mattscheibe hin nimmt die Absorption radial kontinuierlich zu. In Fig. 4 ist der ausgeleuchtete Bereich strichliert angedeutet. Er entspricht dabei üblicherweise etwa den Abmessungen der Kopiervorlage N. Die Ortsabhängigkeit der Punktgrösse des Punkt-Rasters 83 ist dabei derart gewählt, dass das resultierende Punkt-Raster 83 bei kleinster Vergrösserung einen Randabfall der Beleuchtung in der Ebene des Kopiermaterials P von etwa 5% bedingt.

Es versteht sich, dass das Punkt-Raster 83 nicht notwendigerweise direkt auf die lichtaustrittsseitige Mattscheibe 8 aufgedruckt sein muss. Das Punktraster 83 kann auch auf einer separaten transparenten Folie aufgebracht sein, die auf die Mattscheibe 8 aufgebracht wird. In diesem Fall sind die Transmissionseigenschaften der Mattscheiben des ersten und des zweiten Lichtschachtes vorzugsweise identisch gewählt. Ein Satz von austauschbaren Lichtschächten kann auch mehr als zwei Lichtschächte mit unterschiedlichen Punkt-Rastern 83 im lichtaustrittsseitigen Bereich aufweisen. Es kann auch bei einer Belichtungsstation die Möglichkeit vorgesehen sein, lichtaustrittsseitig des Lichtschachtes 5 ein entsprechend mit einem Punkt-Raster 83 versehenes Absorptionselement mit vom Zentrum zum Rand radial ansteigender Absorption in den Strahlengang des Kopierlichtes L einzuschwenken. In diesem Fall findet man mit einem einzigen Lichtschacht das Auslangen. Die Transmissionseigenschaften der lichtaustrittsseitigen Mattscheibe 8 dieses Lichtschachtes 5 entsprechen dabei denen des ersten Lichtschachtes für grosse Vergrösserungen bei einem Satz von Lichtschächten.

Die erfindungsgemässe Ausbildung der Belichtungsstation ist aber auch bei Beleuchtungseinrichtungen anwendbar, die keine Randüberhöhung erzeugen. In diesem Fall ist ein modifizierter Satz von Lichtschächten erforderlich. Für grosse Vergrösserungen muss die lichtaustrittsseitige Mattscheibe 8 im Zentrum 81 eine grosse Absorption aufweisen, während die Absorption im Randbeireich des ausgeleuchteten Bereiches B der Mattscheibe 8 eine kleine Absorption aufweist. Für kleine Vergrösserungen ist im zentralen Bereich 81 der lichtaustrittseitigen Mattscheibe 8 möglichst wenig Absorption erforderlich. Ein Satz von Lichtschächten würde in diesem Fall einen ersten Lichtschacht für kleine und mittlere Vergrösserungen umfassen, dessen lichtaustrittsseitige Mattscheibe 8 eine über ihre Fläche homogene und maximale Transmission aufweist, sowie weinigstens einen zweiten Lichtschacht, dessen lichtaustrittsseitige Mattscheibe 8 im zentralen Bereich 81 eine grosse Absorption aufweist, die vom Zentrum nach aussen an den Rand 82 des ausgeleuchteten Bereiches B der Mattscheibe 8 radial kontinuierlich abnimmt. Im Falle einer Ausführungsvariante mit nur einem Lichtschacht 5 umfasst dieser eine lichtaustrittsseitige Mattscheibe 8 mit über ihre Fläche homogener maximaler Transmission sowie beispielsweise eine lichtsaustrittsseitig in den Strahlengang L der Kopierlichtquelle 3 einbringbare transparente Folie mit einem Punkt-Raster 83, das in einer maximalen Absorption im zentralen Bereich 81 resultiert, die nach aussen zum Rand 82 des ausgeleuchteten Bereiches B der lichtaustrittsseitigen Mattscheibe 8 radial kontinuierlich abnimmt.

Die erfindungsgemässe Ausbildung der Belichtungsstation eines fotografischen Kopiergerätes erlaubt es, auf einfache Weise die unterschiedlichen Beleuchtungserfordernisse bei unterschiedlichen Vergrösserungsmassstäben bereitzustellen. Der Randabfall des Kopierlichtes kann durch geeignete Beeinflussung der Transmissionseigenschaften der lichtaustrittsseitigen Mattscheibe des Lichtschachtes kompensiert werden. Die Lösung ist kostengünstig, platzsparend und daher insbesondere für den Einsatz bei kompakten fotografischen Kopiergeräten geeignet.

## Patentansprüche

1. Belichtungssystem für ein fotografisches Kopiergerät, umfassend eine oberhalb einer Transportebene (T) für eine Kopiervorlage (N) angeordnete Beleuchtungseinrichtung (2) mit einer Lampe (3) als Kopierlichtquelle und eine zwischen der Transportebene (T) der Kopiervorlage (N) und einer Transportebene (S) von Kopiermaterial (P) angeordnete Projektionsoptik (9) zur Abbildung der Kopiervorlage (N) auf das Kopiermaterial (P) und zur Einstellung unterschiedlicher Vergrößerungsmaßstäbe, wobei das Belichtungssystem einen Satz aus wenigstens zwei Lichtschächten (5) umfaßt, die zwischen der Lampe (3) und der Kopiervorlage (N) im Strahlengang (L) der Lampe (3) angeordnet werden können, und die lichtaustrittsseitig jeweils eine Mattscheibe (8) aufweisen, wobei die Lichtschächte sich voneinander dadurch unterscheiden, daß die Transmissionseigenschaften der jeweils zugehörigen Mattscheibe (8) über deren Fläche unterschiedlich verteilt sind, so daß durch Auswählen eines Lichtschachtes aus dem Satz von Lichtschächten eine Anpassung der Leuchtdichteverhältnisse des Kopierlichts (L) auf der Kopiervorlage (V) an den jeweiligen eingestellten Vergrößerungsmaßstab durchgeführt werden kann.

2. Vorrichtung nach Anspruch 1, dadurch gekennzeichnet, dass die Mattscheibe (8) an wenigstens einem der Lichtschächte (5) das auf sie einfallende Kopierlicht (L) im wesentlichen nach dem Lambertshen Gesetz diffus streut und deren Transmissionseigenschaften durch die Mattscheibe (8) dem jeweiligen Vergrösserungsmassstab entsprechend beeinflussbar sind.

3. Vorrichtung nach Anspruch 2, dadurch gekennzeichnet, dass die Form des Lichtschachtes (5) derart gewählt ist, dass die Kopiervorlage (N) vollständig ausgeleuchtet ist, dass Vorzugsrichtungen des eingestrahlten Kopierlichtes (L) unterbunden sind, und dass die Leuchtdichte des eingestrahlten Lichtes (L) im Zentrum der Mattscheibe (81) bei gegebener Lampenleistung möglichst gross ist und vom Zentrum (81) zum Rand (82) des ausgeleuchteten Bereichs (B) der Mattscheibe (8) zunimmt, wo sie um etwa 25% höher ist als im Zentrum (81).

4. Vorrichtung nach Anspruch 3, dadurch gekennzeichnet, dass die lichtaustrittsseitige Mattscheibe (8) eine über ihre Fläche homogene Transmission aufweist, die derart beeinflussbar ist, dass die Transmission ausgehend von einem unveränderten zentralen Bereich (81) radial nach aussen zum Rand des ausgeleuchteten Bereiches (B) der Mattscheibe (8) abnimmt, wo die Transmission beispielsweise noch etwa 85% der Transmission im zentralen Bereich (81) der Mattscheibe (8) beträgt.

5. Vorrichtung nach einem der vorangehenden Ansprüche, dadurch gekennzeichnet, dass die Mattscheibe ein vorzugsweise schwarzes Punkt-Raster (83) mit örtlich variabler Punkigrösse aufweist.

6. Vorrichtung nach Anspruch 5, dadurch gekennzeichnet, dass die Ortsabhängigkeit der Punktgrösse des Punkt-Rasters (83) derart gewählt ist, dass bei minimaler Vergrösserung ein Randabfall des Kopierlichtes (L) von 5% eintritt.

7. Vorrichtung nach Anspruch 6, dadurch gekennzeichnet, dass das Punkt-Raster (83) lichtaustrittseitig des Lichtschachtes (5) in den Strahlengang des Kopierlichtes (L) einschwenkbar ist.

8. Vorrichtung nach einem der Ansprüch 1 bis 7, dadurch gekennzeichnet, dass der Satz Lichtschächte einen ersten Lichtschacht, dessen austrittsseitige Mattscheibe (8) eine über ihre Fläche homogene Transmission aufweist, und wenigstens einen baugleichen zweiten Lichtschacht umfasst, dessen austrittsseitige Mattscheibe (8) eine vom Zentrum (81) zum Rand (82) des ausgeleuchteten Bereiches (B) der Mattscheibe (8) radial abnehmende Transmission aufweist, die im zentralen Bereich (81) der Mattscheibe (8) etwa 100% und im Randbereich (82) beispielsweise etwa 85% der Transmission der lichtaustrittsseitigen Mattscheibe (8) des ersten Lichtschachtes beträgt.

9. Vorrichtung nach Anspruch 8, dadurch gekennzeichnet, dass die lichtaustrittsseitige Mattscheibe (8) des zweiten Lichtschachtes mit einem vorzugsweise schwarzen Punkt-Raster (83) mit örtlich variabler Punktgrösse versehen ist.

10. Vorrichtung nach Anspruch 8 oder 9, dadurch gekennzeichnet, dass das Punkt-Raster (83) auf der der Lampe (3) zugewandten Seite der lichtaustrittsseitigen Mattscheibe (8) in einem Raster von etwa 2 mm Abstand, vorzugsweise im Siebdruckverfahren, aufgedruckt ist.

11. Vorrichtung nach einem der Ansprüche 1 bis 9, dadurch gekennzeichnet, dass die lichtaustrittseitige Mattscheibe (8) eine Platte aus Polymethylmethacrylat (Plexiglas) mit einer Dicke von etwa 2 mm bis etwa 4 mm, vorzugsweise etwa 3 mm, ist, die ein Streuvermögen von mindestens etwa 0.57 aufweist und einen Transmissionsgrad von wenigstens etwa 44% aufweist.

12. Vorrichtung nach einem der vorangehenden Ansprüche, dadurch gekennzeichnet, dass jeder Lichtschacht (5) ein Gehäuse (6) aus einem Kunststoffspritzgussteil umfasst, dessen einander zugewandte Innenwände zur Verspiegelung mit Aluminium und ggf. Siliziumdioxid bedampft oder sonstwie reflektierend beschichtet sind.

13. Fotografisches Kopiergerät zur Kopie von fotografischen Kopiervorlagen (N) auf fotografisches Kopiermaterial (P), umfassend eine Belichtungsstation (1) mit einer Beleuchtungseinrichtung (2) gemäss einem der Ansprüche 1-12.

## Claims

1. Exposure system for a photographic copier, comprising a lighting installation (2) disposed above a transport level (T) for an original (N) with a lamp (3) as a light source for copying, and, disposed between the transport level (T) of the original (N) and a transport level (S) of the copying material (P), a projection optical system (9) for forming the image of the original (N) on the copying material (P) and for the setting of different degrees of enlargement, the exposure system having a set of at least two light shafts (5) which can be disposed between the lamp (3) and the original (N) in the path of the beam (L) of the lamp (3), and which each have a ground glass screen (8) on the light emission side, the light shafts differing from one another in that the transmission characteristics of the respective ground glass screen (8) are variably distributed over its surface, so that by selecting a light shaft from the set of light shafts it is possible to adjust the light intensity of the copying light (L) falling on the original (N) to the degree of enlargement selected.

2. Device according to Claim 1, characterized in that the ground glass screen (8) on at least one of the light shafts (5) diffuses the copying light incident upon it substantially in accordance with Lambert's Law, and its transmission characteristics through the ground glass screen (8) can be influenced corresponding to the respective degree of enlargement.

3. Device according to Claim 2, characterized in that the form of the light shaft (5) is so chosen that the original (N) is completely illuminated, that preferred directions of the incident copying light (L) are prevented, and that the light intensity of the incident light (L) is as high as possible for a given light output in the centre (81) of the ground glass screen and increases from the centre (81) to the edge (82) ofthe illuminated area (B) ofthe ground glass screen (8), where it is approximately 25% higher than in the centre (81).

4. Device according to Claim 3, characterized in that the ground glass screen (8) on the light emission side displays homogeneous transmission over its surface, which can be influenced in such a way that transmission decreases starting from an unchanged central area (81) moving radially outwards to the edge of the illuminated area (B) of the ground glass screen (8), where transmission amounts for instance to approximately 85% of the transmission in the central area (81) of the ground glass screen.

5. Device according to one of the preceding Claims, characterized in that the ground glass screen has a preferably black dot grid (83) with a dot size variable from one area to another.

6. Device according to Claim 5, characterized in that the relation of the dot size of the grid (83) to its position is so chosen that with a minimum degree of enlargement a marginal deterioration of the copying light (L) of 5% occurs.

7. Device according to Claim 6, characterized in that the dot grid (83) on the light emission side of the light shaft (5) can be swung into the path of the beam of the copying light (L).

8. Device according to one of the Claims 1 to 7, characterized in that the set of light shafts comprises at least one first light shaft, whose ground glass screen (8) on the emission side displays homogeneous transmission over its surface, and at least one second light shaft constructed in the same manner, whose ground glass screen (8) on the emission side displays a transmission decreasing radially from the centre (81) to the edge (82) of the illuminated area (B) of the ground glass screen (8), which transmission amounts to approximately 100% in the central area (81) of the ground glass screen (8) and in the marginal area (82) for instance to approximately 85% of the transmission of the ground glass screen (8) on the light emission side of the first light shaft.

9. Device according to Claim 8, characterized in that the ground glass screen (8) on the light emission side of the second light shaft is provided with a preferably black dot grid (83) with a dot size variable from one area to another.

10. Device according to Claim 8 or 9, characterized in that the dot grid (83) is imprinted on the side facing the lamp (3) of the ground glass screen (8) on the light emission side in a grid with approximately 2mm gaps, using silk-screen printing.

11. Device according to one of the Claims 1 to 9, characterized in that the ground glass screen (8) on the light emission side comprises a plate of polymethylmethacrylate (Plexiglas) having a thickness of at least approximately 2 to 4mm, preferably approximately 3mm, which has a diffusion capacity of approximately 0.57 and a transmission factor of at least approximately 44%.

12. Device according to one of the preceding Claims, characterized in that each light shaft (5) comprises a housing (6) which is an injection moulding, whose inner walls facing one another are vapour-blasted with aluminium and possibly silicon dioxide to give a reflective surface or coated with some other reflective material.

13. Photographic copier for copying photographic originals (N) onto photographic copying material (P), comprising an exposure unit (1) with a lighting installation (2) according to one of the Claims 1-12.

## Revendications

1. Système d'exposition pour une tireuse photographique, comportant un dispositif d'éclairement (2), disposé au-dessus d'un plan de transport (T) pour un original à tirer (N), avec une lampe (3) comme source de lumière pour le tirage, ainsi qu'une optique de projection (9), disposée entre le plan de transport (T) de l'original à tirer (N) et un plan de transport (S) du matériau (P) support de tirage, pour former, sur le matériau (P) support de tirage, l'image de l'original à tirer (N) et pour prescrire différentes échelles d'agrandissement, dans lequel le système d'exposition comporte un jeu d'au moins deux puits de lumière (5) qui peuvent être disposés entre la lampe (3) et l'original à tirer (N), sur le trajet (L) des rayons de la lampe (3) et qui présentent chacun, du côté de la sortie de la lumière, un verre dépoli (8), les puits de lumière se distinguant l'un de l'autre par le fait que les caractéristiques de transmission du verre dépoli (8) chaque fois correspondant sont différemment réparties sur sa surface, de sorte qu'en choisissant un puits de lumière parmi le jeu de puits de lumière on peut procéder à une adaptation des rapports de la densité lumineuse de la lumière (R) sur l'original à tirer (V) selon l'échelle d'agrandissement chaque fois prescrite.

2. Dispositif selon la revendication 1, caractérisé par le fait que le verre dépoli (8) qui se trouve sur au moins l'un des puits de lumière (5) diffuse sensiblement selon la loi de Lambert la lumière incidente (L) pour le tirage et que ses caractéristiques de transmission peuvent être influencées par le verre dépoli (8) en fonction de l'échelle d'agrandissement respective.

3. Dispositif selon la rcvendication 2, caractérisé par le fait que la forme du puits de lumière (5) est choisie de façon que l'original à tirer (N) soit entièrement éclairé, que des direction préférentielles de la lumière incidente (L) pour le tirage soient empêchées et que la densité lumineuse de la lumière incidente (L) au centre du verre dépoli (80) pour une puissance donnée de la lampe soit la plus grande possible et croisse du centre (80) vers le bord (82) de la zone éclairée (B) du verre dépoli (8), où elle est supérieure d'environ 25%, à ce qu'elle est au centre (80).

4. Dispositif selon la revendication 3, caractérisé par le fait que le verre dépoli (8) situé du côté de la sortie de la lumière présente un facteur de transmission qui est homogène sur sa surface et qui peut être influencé de façon qu'en partant d'une zone centrale (81) inchangée, le facteur de transmission décroisse radialement vers l'extérieur en allant vers le bord de la zone éclairée (B) du verre dépoli (8), où le coefficient de transmission vaut par exemple encore environ 85% du coefficient de transmission de la zone centrale (81) du verre dépoli (8).

5. Dispositif selon l'une des revendication précédentes, caractérisé par le fait que le verre dépoli présente une trame (83) de points, de préférence noirs, à dimension des points localement variable.

6. Dispositif selon la revendication 5, caractérisé par le fait que la dépendance de la dimension des points de la trame de points (83) en fonction de l'endroit est choisie de façon que dans le cas d'un agrandissement minimal apparaisse en bordure une décroissance de la densité lumineuse (L) de 5%.

7. Dispositif selon la revendication 6, caractérisé par le fait que la trame de points (83) située du côté de la sortie de la lumière du puits de lumière (5) peut pivoter sur le trajet des rayons de la lumière pour le tirage (L).

8. Dispositif selon l'une des revendication 1 à 7, caractérisé par le fait que le jeu de puits de la lumière présente un premier puits de lumière dont le verre dépoli (8) situé du côté de la sortie présente un facteur de transmission homogène sur sa surface et comporte au moins un second puits de lumière de même construction dont le verre dépoli (8) situé du côté de la sortie présente un facteur de transmission qui va en décroissant radialement depuis le centre (81) en allant vers la bordure (82) de la zone éclairée (B) du verre dépoli (8) et qui, dans la zone centrale (81) du verre dépoli (8) vaut environ 100% et, dans la zone de bordure (82), par exemple environ 85% du coefficient de transmission du verre dépoli (8) situé du côté de la sortie, du premier puits de lumière.

9. Dispositif selon la revendication 8, caractérisé par le fait que le verre dépoli (8), situé du côté de la sortie de la lumière, du second puits de lumière comporte une trame (83) de points, de préférence noirs, à dimension des points localement variable.

10. Dispositif selon la revendication 8 ou 9, caractérisé par le fait que la trame de points (83) est imprimée, sur la face, orientée vers la lampe (3), du verre dépoli (8) situé du côté de la sortie de la lumière, selon une trame à écartement d'environ 2mm, de préférence par le procédé de sérigraphie.

11. Dispositif selon l'une des revendications 1 à 9, caractérisé par le fait que le verre dépoli (8) situé du côté de la sortie de la lumière est une plaque de polyméthylméthacrylate (Plexiglas) d'une épaisseur d'environ 2mm à environ 4mm, de préférence environ 3mm, qui présente un pouvoir de diffusion d'au moins environ 0,57 et un facteur de transmission d'au moins environ 44%.

12. Dispositif selon l'une des revendications précédentes, caractérisé par le fait que chaque puits de lumière (5) comporte une enveloppe (6) constituée d'une pièce de plastique moulé par injection dont les parois intérieures, orientées l'une vers l'autre, sont, pour donner un miroir, revêtues, par vaporisation, d'aluminium et éventuellement de dioxyde de silicium ou autrement revêtues d'une couche réfléchissante.

13. Tireuse photographique pour le tirage d'originaux photographiques à tirer (N) sur un matériau (P) support de tirage photographique, comportant une station d'exposition (1) avec un dispositif d'éclairement (2) conforme à l'une des revendications 1- 12.
